Europäisches Patentamt

(19) European Patent Office

Office européen des brevets

(11) Publication number: **0 001 348**

A1

(12) # EUROPEAN PATENT APPLICATION

(21) Application number: **78300396.5**

(22) Date of filing: **18.09.78**

(51) Int. Cl.²: **F 16 H 3/60**
**B 63 H 23/08**

(30) Priority: **22.09.77 GB 39630/77**
**24.05.78 GB 39630/77**

(43) Date of publication of application:
**04.04.79 Bulletin 79/7**

(84) Designated contracting states:
**CH DE SE**

(71) Applicant: **Vickers Shipbuilding Group Limited**
**Barrow-in-Furness**
**Cumbria, LA14 1AB(GB)**

(72) Inventor: **Calverley, John**
**31 Leece Lane Roose**
**Barrow-in-Furness Cumbria(GB)**

(74) Representative: **Overbury, Richard Douglas**
**HASELTINE LAKE & CO Hazlitt House 28 Southampton**
**Buildings Chancery Lane**
**London WC2A 1AT(GB)**

(54) Gear transmissions.

(57) The invention relates to high power gear transmissions such as may be used in marine applications. The gear transmission is reversible and utilises an epicyclic construction involving sun, planet and annulus gears and including a first coupling (9, 10) which in an engaged condition makes the annulus gear support member (5) rotationally fast with the input shaft (1), and a second coupling (13, 14) which in an engaged condition locks the planet gear carrier (12) against rotation. The transmission has two operative conditions, a first in which the first coupling is engaged and the second coupling disengaged, and a second in which the second coupling is engaged and the first coupling disengaged so that for a single direction of rotation of the input shaft the output shaft can be rotated in either direction.

*FIG.I.*

-1-

## GEAR TRANSMISSIONS

This invention relates to high-power gear transmissions, such as may be used in marine applications.

It is normaly practice in marine usage to drive a
ship's propeller(s) from a power source, which may be of
diesel, diesel-electric or turbine form, through a
reduction gear arrangement, commonly of the parallel
shaft type. When it is desired to reverse the direction
of rotation of the propeller(s), one of several methods
may be used. In the case of some diesel engines and
diesel-electric systems, the whole drive train is
stopped and the engine or electric motor re-started in
the reverse sense of rotation. In the case of turbine
systems, some of which cannot be successfully operated in
reverse, the ahead turbine is stopped and the working
fluid passed to a separate astern turbine. In all
these arrangements, the whole of the drive train including
the prime mover has to be brought to rest and re-started
in the reverse sense of rotation. This requires the absorption of a maximum amount of momentum energy and is
thus inefficient and time-consuming. To overcome this
problem there has been provided an idler gear-wheel or
gear-wheels which can be brought into the power transmission
train and so reverse the direction of rotation of the
output shaft of the train. This has the advantage that
the direction of rotation of the prime mover does not have
to be reversed. The disadvantages are that the size,
weight and complexity of the gearbox are greatly increased.

A further means of reversing the motion of a propeller-

-2-

driven ship is to use a propeller the pitch of which may be controlled. However, controllable pitch propellers require extensive complex controlling equipment needing considerable maintenance and such systems have proved unreliable where high power transmission is involved.

It is, therefore, the object of the present invention to provide a high power gear transmission which has a simple, compact construction and which avoids the large loss of momentum energy associated with the prior art transmissions.

According to the present invention there is provided a gear transmission comprising an input shaft, an epicyclic gear arrangement having its sun pinion fast for rotation with said input shaft, and an output shaft coupled for rotation in dependence upon rotation of a member that supports the annulus gear of the epicyclic gear arrangement, characterised in that a first coupling in an engaged condition thereof makes said annulus gear support member rotationally fast with said input shaft, and a second coupling in an engaged condition thereof locks the planet carrier of the epicyclic gear arrangement against rotation, the gear transmission having a first operative condition in which said first coupling is engaged and said second coupling is disengaged, and a second operative condition in which said first coupling is disengaged and said second coupling is engaged, whereby for a single direction of rotation of said input shaft, said output shaft is rotated in one direction in said first operative condition of the gear transmission and in the reverse direction in said second operative condition.

The use of an epicyclic gear arrangement enables the individual gears to be meshed permanently and permits the adoption of a compact design whilst allowing the transmission to be used for high-power conditions. When changing between forward speed and reverse speed the momentum engergy which has to be absorbed is small thus permitting a rapid and efficient change.

The first coupling may comprise a clutch and the second coupling may comprise a brake, the clutch being engageable with the annulus gear support member to make the support member rotationally fast with the input shaft and the brake being engageable with the output shaft for braking the rotation of the output shaft.

The output shaft may be parallel with the input shaft, a reduction gear arrangement being interposed between the annulus gear support member and the output shaft. The gear transmission may include a further reduction gear between the input shaft and the sun pinion.

Alternatively, the output shaft and the input shaft may be coaxial. The gear transmission may include a reduction gear between the output shaft and a further output shaft parallel to the first-mentioned output shaft. Alternatively or additionally, the gear transmission may include a reduction gear between the input shaft and a further input shaft parallel to the first-mentioned input shaft.

For a better understanding of the invention and to show more clearly how it may be carried into effect reference will now be made, by way of example, to the accompanying drawings, in which:-

Figure 1 is a diagrammatic illustration of a parallel shaft reversible reduction gear transmission;

Figure 2 is an illustration similar to Figure 1 of a modified form of the transmission of Figure 1;

Figure 3 is a diagrammatic illustration of a co-axial shaft reversible gear transmission; and

Figures 4 to 8 are diagrammatic representations of various usages of the transmission of Figures 1 to 3.

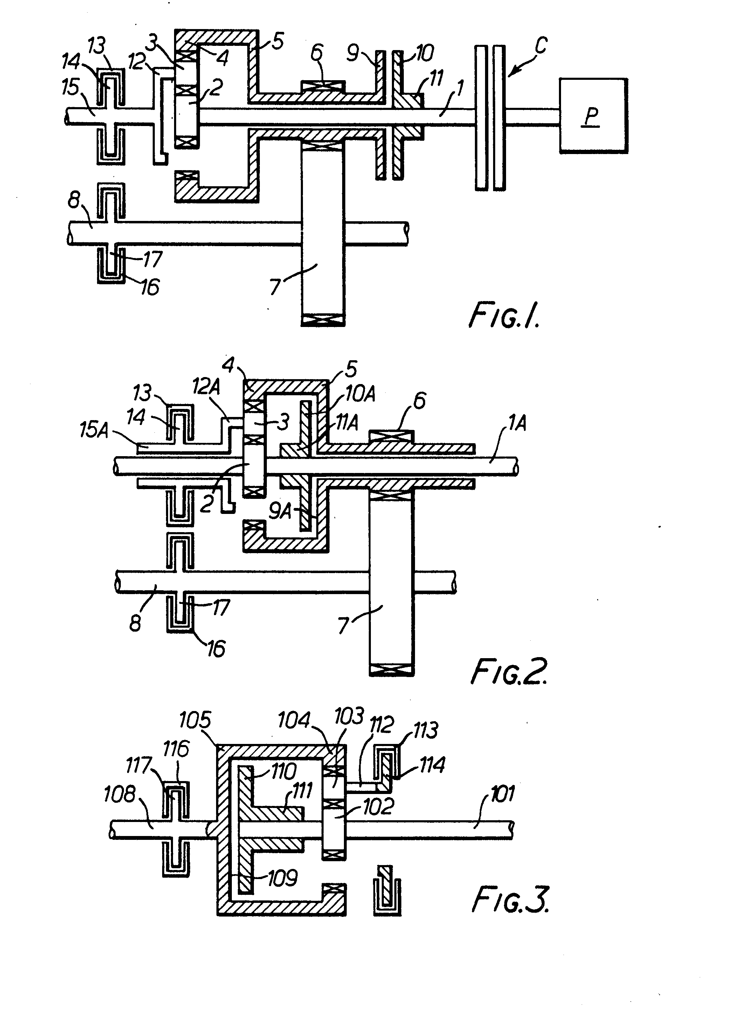

Referring first to Figure 1, rotational power from a power source P comes via a clutching mechanism C to an input shaft 1 of the gear transmission, this shaft being rigidly connected to a sunwheel 2. The sunwheel 2 forms part of an epicyclic gear arrangement and meshes with the plurality of planet pinions 3 of this gear arrangement which in turn mesh with the annulus gear 4 of the arrangement. The annulus gear 4 is supported by a member 5 which also carries a pinion 6 of a reduction gear arrangement. The pinion 6 meshes with a gearwheel 7 of this reduction gear arrangement and which is rigidly connected to the output shaft 8 of the transmission, the shafts 1 and 8 being parallel.

The member 5 which supports the annulus gear 4 and the pinion 6 also carries a clutch plate 9 which may be engaged with a clutch plate 10. The clutch plate 10 is connected to the input shaft 1 so that both rotate together, a clutch actuating mechanism 11 being provided for sliding the clutch plate 10 along the input shaft 1 to engage with or disengaged from the clutch plate 9. For descriptive and diagrammatic purpose, simple plate clutches are illustrated in the Figures, but any other clutching mechanism is equally applicable.

Associated with a planet carrier 12 of the planet pinions 3 is a brake mechanism consisting of a brake member 13 co-operating with a brake surface 14 rigid via a shaft 15 with the planet carrier 12.

When the clutch plates 9 and 10 are engaged, and with the brake mechanism non-operative, the clutch plate 10, input shaft 1, sunwheel 2, the plurality of planet pinions 3, annulus gear 4, connecting member 5, primary pinion 6 and clutch plate 9 all rotate together as a solid body. This is the condition of the transmission for forward motion, with the speed of the output shaft 8 controlled directly through the reduction gear arrangement 6/7 by the speed of the power source P.

If the clutch actuating mechanism 11 is operated to disengage the clutch plate 10 from the clutch plate 9, the sunwheel 2 and the annulus gear 4 are no longer locked together as a rotationally solid body, and the planet carrier 12 is able to rotate freely so that there is no power transmission to the output shaft 8. If the brake member 13 is then applied to the braking surface 14 which is rigidly connected through the shaft 15 to the planet carrier 12, the planet carrier 12 ceases to rotate and

-5-

the annulus gear 4 is caused to reverse its direction of rotation, that is it is caused to rotate in the opposite sense to that of the sunwheel 2. In this condition, the epicyclic gear is said to be operating in the 'star configuration' and the planet pinions 3 are being used as simple idler gears to reverse the direction of rotation of the annulus gear 4. Because this annulus gear 4 is rigidly connected through the member 5 to the pinion 6, the direction of rotation of pinion 6, gear wheel 7 and ouput shaft 8 is also reversed. Thus, by simply disengaging the clutch plates 9 and 10 and engaging the brake mechanism 13/14, a reversal of the direction of rotation of the output shaft 8 is effected, and by disengaging the brake mechanism 13/14 and re-engaging the clutch plates 9 and 10, forward rotation is restored. Depending upon the ratio of the epicyclic gear arrangement 2/3/4, the reverse speed of rotation of the output shaft 8 will be a fraction of the speed of the input shaft 1.

In order to reduce the duty required of the brake mechanism 13/14 when changing from the forward to the reverse sense of rotation, and of the clutch plates 9 and 10 when changing from the reverse to the forward sense of rotation, a further brake mechanism 16/17 is provided, brake member 16 of this mechanism co-operating with braking surface 17 which is rigidly connected to the gear output shaft 8.

In practical operation, one means of changing from the forward to the reverse directions of motion is to use a primary clutch mechanism C to disengage the power input to the shaft 1, then engage the brake mechanism 16/17 to cause all rotation within the gear transmission to cease before disengaging the clutch plates 9 and 10 and engaging the brake mechanism 13/14, whereafter the brake mechanism 16/17 is released and the primary clutch mechanism C is re-engaged to connect the power source back to the reduction gear arrangements 6/7. In this form, both the clutch mechanism 9/10 and the brake mechanism 13/14 can be simple mechanical connecting mechanisms, for example toothed couplings or dog clutches.

In the operation just described, the primary clutch mechanism C and the brake mechanism 16/17 have to accommodate the slipping energy developed during the change from forward to reverse rotation. As an alternative, this change can be effected with the power input still connected to the input shaft 1. In this case the prime mover is reduced to idling speed, the clutch plates 9 and 10 disengaged and the brake mechanism 16/17 engaged so as to bring the system to rest excluding input shaft 1, sunwheel 2 and the planetary assembly 3/12/14/15. The brake mechanism 16/17 is then released and the brake mechanism 13/14 gradually engaged in the manner of a clutch to initiate reverse rotation to the output shaft 8. In this case the slipping energy developed is accommodated by the brake mechanism 13/14 and 16/17. In a similar way, gradual engagement of the clutch plates 9 and 10 can be used to initiate forward rotation with these clutch plates 9 and 10 accommodating the slipping energy developed.

The reversing operation may be conducted in a different sequence depending upon the particular characteristics of the prime mover, gearing and transmission arrangements.

A difference between the form of Figure 1 and the modified form of Figure 2 is that in Figure 2 the input shaft 1A extends straight through the epicyclic gear arrangement so that a power source may be connected at either or both ends. In order to accommodate this straight-through input shaft 1A., the planet carrier 12A and the planet carrier support shaft 15A have an annular section. A further difference is that the clutch plate 10A and clutch actuating mechanism 11A are situated within the member 5, the clutch plate 10A co-operating with a clutch face 9A carried by the member 5. The remainder of the transmission of Figure 2 is the same as that of Figure 1, as indicated by the use of the same reference numerals as used in Figure 1.

The reversible gear transmission of Figure 3 has coaxial input and output shafts 101 and 108. The input shaft 101 is rigidly connected to the sunwheel 102 of an epicyclic gear arrangement having planet pinions 103 and an annulus gear 104 supported by a member 105. The sunwheel 102 is rotationally connected to a clutch plate 110 having clutch actuating mechanism 111 capable of moving the clutch plate 110 along the input shaft 101 to engage with a clutch face 109 carried by the member 105. The member 105 rigidly connects the annulus gear 104 with the output shaft 108, which is fitted with a braking surface 117 operated on by a brake member 116. The planet pinions 103 are supported by a planet carrier 112 which is rigidly attached to a braking surface 114 operated on by a brake member 113.

The transmission of Figure 3 is operated in a manner similar to what has already been described. The forward sense of rotation is achieved with the brake mechanism 113/114 released and the clutch mechanism 109/110 engaged, thereby locking sunwheel 102 and annulus gear 104 together causing the whole transmission to rotate as a solid body. By disengaging the clutch mechanism 109/110 and engaging the brake mechanism 113/114, the planet pinions 103 become idler gears in the star configuration of epicyclic gearing, causing the sense of rotation of the annular gear 104 and hence of the member 105 and output shaft 108 to be reversed. The output shaft brake mechanism 116/117 may be used in the manner previously described to minimise the duty of the brake mechanism 113/114 and the clutch mechanism 109/110.

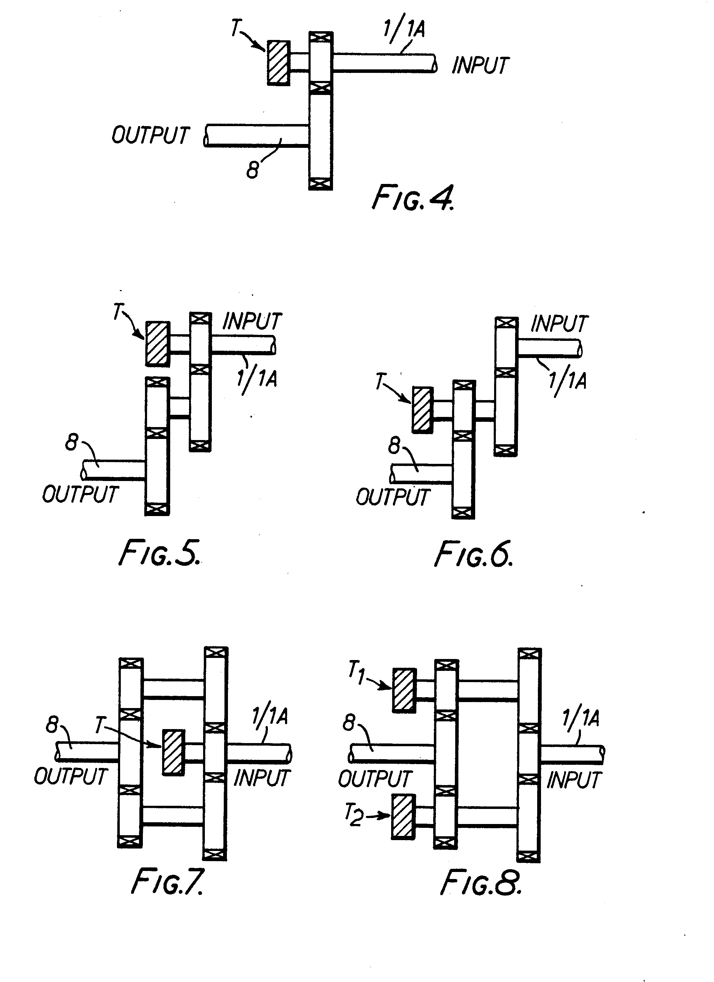

In Figures 1 and 2, reversing gearing is shown in conjunction with a reduction gear. Diagrammatic representations of where the transmissions of Figures 1 or 2 could fit in a single reduction gear are shown in Figure 4, and in a double reduction gear, where there are two possible positions, in Figures 5 and 6. In each case the position of the transmission is indicated by T. There are two possible set-ups in a split train gearing system, as shown in Figures 7 and 8, though in one such set-up (Figure 8) two transmissions T1, T2 as described would be required.

The transmission unit shown in Figure 3 could be incorporated in any of the input, output or intermediate shafts in any of Figures 4 to 8, though it will be noted that on such transmission would be used for each of the intermediate shafts in the split train reduction gearing shown in Figure 8.

The reversible transmissions described above with reference to the accompanying drawings permit adoption of a compact overall design possessing the high power transmission and permanently meshing characteristics of epicyclic gearing. The transmission is not restricted to marine usage and may be fitted into any gear system or into any transmission shaft wherever it suits the particular machinery arrangement, i.e. wherever a compact, high-power transmission is required. Because of its simplicity of design and small mass, it is operable in the minimum period of time. As the reverse speed is usually arranged to be less than the forward speed, the sizes of the pinions 3 (103) which operate only in the star epicyclic configuration may be reduced accordingly, thus saving mass and permitting a more rapid response.

The transmission may be further reduced in size and weight by incorporating load sharing arrangements into the planet pinion mountings. One practical way in which these loads can be shared more equally is to mount each planet pinion at one end of a resilient spindle, the other end of which is mounted on the carrier for the planet pinions. Such a construction is disclosed in U.K. Patent Specification No. 1,101,131. Such a load sharing arrangement comprises a resilient spindle which flexes under the effect of radial loads, the spindle being mounted between a gear wheel and a carrier on which the gear which is normally mounted. This resilience allows the gear wheel to be displaced bodily and laterally rather than being skewed and thus distributes the load equally between a number of planet gears. Such a load sharing arrangement incorporated in the transmission hereinbefore described enables the load to be shared equally between the planet gears and thus permits the gears to be constructed so that they merely have to be capable of withstanding an average load and not so that they have to be constructed so as to be able to withstand the additional forces which result from normal manufacturing tolerances. This may enable the gears to be made smaller and may permit the manufacture of a more compact transmission, the transmission additionally having a smaller moment of inertia.

## CLAIMS

1. A gear transmission comprising an input shaft (1, 1A, 101), an epicyclic gear arrangement having its sun pinion (2, 102) fast for rotation with said input shaft, a plurality of planet gears (3, 103) mounted on a planet carrier (12, 112) and an output shaft (8, 108) coupled for rotation in dependence upon rotation of a member (5, 105) that supports the annulus gear (4, 104) of the epicyclic gear arrangement, characterised in that a first coupling (9, 10; 109, 110) in an engaged condition thereof makes said annulus gear support member rotationally fast with said input shaft, and a second coupling (13, 14; 113, 114) in an engaged condition thereof locks the planet carrier of the epicyclic gear arrangement against rotation, the gear transmission having a first operative condition in which said first coupling is engaged and said second coupling is disengaged, and a second operative condition in which said first coupling is disengaged and said second coupling is engaged, whereby for a single direction of rotation of said input shaft, said output shaft is rotated in one direction in said first operative condition of the gear transmission and in the reverse direction in said second operative condition.

2. A gear transmission as claimed in claim 1, characterised in that the first coupling comprises a clutch (9, 10; 109, 110) and the second coupling comprises a brake (13, 14; 113, 114), the clutch being engageable with the annulus gear support member (5, 105) to make the support member rotationally fast with the input shaft and the brake being engageable with the output shaft for braking the rotation of the output shaft.

3. A gear transmission as claimed in claim 1 or 2, characterised in that the output shaft is parallel with the input shaft, a reduction gear arrangement (6, 7) being interposed between the annulus gear support member and the output shaft.

4. A gear transmission as claimed in claim 3, characterised in that the transmission includes a further reduction gear between the input shaft and the sun pinion.

5.   A gear transmission as claimed in claim 1 or 2, characterised in that the output shaft and the input shaft are coaxial.

6.   A gear transmission as claimed in claim 5, characterised in that the transmission includes a reduction gear between the output shaft and a further output shaft parallel to the first-mentioned output shaft.

7.   A gear transmission as claimed in claim 5 or 6, characterised in that the transmission includes a reduction gear between the input shaft and a further input shaft parallel to the first-mentioned input shaft.

8.   A gear transmission as claimed in any preceding claim, characterised in that each of the planet gears is mounted on the planet carrier by way of a resilient spindle.

FIG.1.

FIG.2.

FIG.3.

0001348

FIG.4.

FIG.5.

FIG.6.

FIG.7.

FIG.8.

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| X | <u>DE - C - 343 651</u> (MEINDL) <br> * Claims * <br> -- | 1,2,5 | F 16 H  3/60 <br> B 63 H  23/08 |
| X | <u>DE - C - 328 862</u> (SCHUETTE-LANZ) <br> * Page 1, lines 27-62 * <br> -- | 1,2,5 | |
| X | <u>FR - A - 905 503</u> (COTAL) <br> * Page 3, lines 36-47; figure 3 * <br> -- | 1,2,5 | |
| | <u>US - A - 2 672 769</u> (GERST) <br> * Column 2, lines 22-32; claim 1 * <br> -- | 1,2,4, 7 | TECHNICAL FIELDS SEARCHED (Int.Cl.²) <br><br> F 16 H <br> B 63 H |
| | <u>GB - A - 989 161</u> (STAL LAVAL) <br> * Page 1, lines 56-85; figure 1 * <br> -- | 1,3,6 | |
| | <u>DE - B - 1 213 688</u> (DAIMLER-BENZ) <br> * Column 3, lines 14-28 * <br> -- | 1,2,3, 6 | |
| D | <u>GB - A - 1 101 131</u> (NATIONAL RESEARCH) <br> * Page 3, claim 3 * <br> -- | 8 | |
| A | <u>GB - A - 1 004 910</u> (ASSOCIATED ELECTRICAL INDUSTRIES) <br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 05-12-1978 | SEIFRIDSBERGER |

EPO Form 1503.1   06.78